(19) **Europäisches Patentamt European Patent Office Office européen des brevets**

(11) **EP 2 506 956 B1**

(12) **EUROPEAN PATENT SPECIFICATION**

(45) Date of publication and mention
of the grant of the patent:
**01.03.2017 Bulletin 2017/09**

(21) Application number: **10787967.8**

(22) Date of filing: **29.11.2010**

(51) Int Cl.:
**B01D 61/18** *(2006.01)*          **B01D 63/08** *(2006.01)*
**B01D 71/02** *(2006.01)*          **B01D 71/04** *(2006.01)*
**B01J 19/00** *(2006.01)*

(86) International application number:
**PCT/US2010/058192**

(87) International publication number:
**WO 2011/068753 (09.06.2011 Gazette 2011/23)**

(54) **METHOD OF INSERTION OF POROUS MATERIALS IN MICROFLUIDIC DEVICES**

VERFAHREN FÜR DEN EINSATZ VON PORÖSEN MATERIALIEN BEI MIKROFLUIDISCHEN VORRICHTUNGEN

PROCÉDÉ D'INSERTION DE MATÉRIAUX POREUX DANS DES DISPOSITIFS MICROFLUIDIQUES

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **01.12.2009 FR 0958542**

(43) Date of publication of application:
**10.10.2012 Bulletin 2012/41**

(73) Proprietor: **Corning Incorporated Corning, NY 14831 (US)**

(72) Inventors:
• **DAVIDOVITS, Jerome, V**
**F-77810 Thomery (FR)**
• **HORN, Clemens, R**
**F-91630 Guibeville (FR)**
• **LAVRIC, Elena, D**
**F-77210 Avon (FR)**
• **TANGUY, Ronan**
**F-77880 Grez Sur Loing (FR)**
• **WAKU-NSIMBA, Jean**
**77940 La Brosse-Montceaux (FR)**

(74) Representative: **Le Roux, Martine et al Cabinet Beau de Loménie 158, rue de l'Université 75340 Paris Cedex 07 (FR)**

(56) References cited:
**US-A- 5 961 932          US-A1- 2003 192 587 US-A1- 2004 053 422**

EP 2 506 956 B1

**Description**

**BACKGROUND**

This application claims the benefit of priority under 35 USC 119(e) of French Application No. 0958542 filed December 1, 2009.

**BACKGROUND**

A microfluidic device and a method of manufacture thereof is also disclosed in Applicants' previous patent application US 2003/0,192,587 A1.

The microfluidic device comprises a first assembly comprising a microstructure and a first substrate, the microstructure being constructed and arranged on the first substrate under vacuum; a second assembly comprising a second substrate positionned on the microstructure after the first assembly is presintered and adhered thereto by heat treatment to form a one-piece microstructure defining at least one recess between the first and second substrate.

The thermoformed structure can be formed from a material selected from the group consisting essentially of glass, glass-ceramics and ceramics.

WO 2005/063379 A1 (CORNING INC) discloses further membrane microstructure devices and a method of manufacture thereof.

Also, WO 2008/085429 A2 CORNING INC discloses a microfluidic structure with integrated devices.

US Patent No. 5,965,092 discloses an integrated micro-ceramic chemical plant having a unitary ceramic body formed from multiple ceramic layers in the "green" state which are sintered together and define a reaction chamber and a first passage for providing communication with a catalytic reaction chamber so that two or more fluids may be delivered to such reaction chamber for reaction; the unitary ceramic body further defines a receiving chamber connected to the reaction chamber. The integrated micro-ceramic chemical plant further includes a movable member insertable into the receiving chamber and having a plurality of micro- filters for separating the reaction products so as to retrieve desired reaction products; and the movable member is moved to a position where one of the micro filters is in communication with the reaction chamber for separating the reaction products.

The permeable partition wall 39a is preferably made by dry pressing ceramic and its composite powders such as zirconia silicate, alumina silicate, zirconia, alumina, silicon carbide, silicon nitride and ceramic composites comprising zirconia--alumina at a pressure such that upon sintering the desired degree of porosity is maintained. It is very important that the pores need to be of the interconnecting variety. The permeable partition wall 39a can also be made alternatively by gel casting, tape casting and injection molding zirconia silicate or alumina silicate such that upon controlled sintering a varying degree of porosity is achieved. The permeable partition wall 39a permits controlled reaction between the chemicals in the fluids on either side of the permeable partition wall 39a to permit the mixing of such fluids during a reaction process.

A description of the microfilter is given on column 11, paragraph b which comes from creating the porosity by the presence of polymeric fibers admixed with the ceramic powder which, once destroyed by the sintering process provides the porosity (col 11, lines 25-29). There is no disclosure that a particular sealing step would provide a change or a control of the porosity as in the present invention described below.

WO-03093406 discloses porous membranes incorporated in micromodules, said membranes manufactured for example, from fluoropolymers such as the microporous membranes Teflon® (e.g., Teflon AF 2400, DuPont), Goretex, from cellulose acetate, from porous glasses (e.g., Vycor® from Corning Incorporated), microporous ceramic membranes (e.g., made by sol-gel techniques), zeolite membranes, and silicones such as the diffusion membrane PDMS.

JP08024600 discloses use of a glass porous membrane in a microstructure device for separation having the concentration of a silylating agent residual group equal to or above a specific quantity, thereby providing porous membranes working as a one way valve.

US 5 961 932 discloses a reaction chamber for a microceramic chemical plant. The structure disclosed comprises a permeable partition wall 36 preferably made by dry-pressing ceramic and its composite powders at a pressure such that upon sintering the desired degree of porosity is maintained. The permeable partition wall 36 can also be made alternatively by gel casting, tape casting and injection molding zirconia, silicate, alumina silicate such that upon controlled sintering a varying degree of porosity is achieved (column 4, lines 48-57).

Custom tailored permeability can be controlled by controlling the compacting pressure, diameter of the polymer fibers and sintering temperature for a given ceramic composition (column 5, lines 1-3).

US 2004/005422 discloses a microfluidic device with a porous membrane for molecular sieving, metering and separations which can be located transversely in a section of microfluidic channel 104 formed in a substrate 106 (page 2, paragraph [0017]).

It is inferred that in general, the porous membranes may be manufactured such that their porosity is greatest along a selected direction. Furthermore, through the manufacturing processes the pore sizes can be tuned from a few nanometers to micrometers thereby enabling the filtration, metering and separation of targeted chemical and biological molecules (page 2, paragraph [0018]).

US 2003/192587 discloses again microfluidic devices and method of manufacture thereof.

The device may include at least one element having at least one porous substrate and/or one-piece microstructure that is porous (page 3, paragraph [0034]).

PURPOSES OF THE INVENTION

A main purpose of the invention is to solve the new technical problem of providing microfluidic devices comprising a porous membrane in which the porosity of the membrane can be set at will according to the intended use.

The invention has further as main purpose to solve this new technical problem according to a solution which permits use of porous membranes available on the market.

Finally, another purpose of the invention is to solve these technical problems according to a solution which is not costly, easily implementable by an industrial process providing manufacture at the industrial scale.

## SUMMARY OF THE INVENTION

DEFINITIONS:

In the specification and claims the following definitions apply:

D1) Porous membrane means a membrane of the relevant glass, ceramic or vitroceramic material which has a given porosity resulting from its method of manufacture. These porous membranes are available on the market.

D2) Porosity of the porous membrane means the percentage in volume of porosity in the relevant material, such as measured according to a porosimeter device of trademark AUTOPORE IV of the Series 9520, available on the market from American Company Micromeritics® at Norcross, Georgia, USA, according to a process which is well known to one skilled in the art and which comprises applying various levels of pressure to a sample immersed in mercury. The pressure required to intrude mercury into the sample's pores is inversely proportional to the size of the pores.

To perform an analysis, the sample is loaded into a penetrometer, which comprises a sample cup which can be tighly closed by a lid, receipt of said sample connected to a glass capillary stem, having a precision-bore and coated on the external surface with a metallic deposit cladding, enabling to vary the capacitance in function in the height of the mercury in the capillary stem. The penetrometer is sealed and placed in a low pressure port, where the sample is evacuated to remove air and moisture, to enable to fill automatically the capillary stem and the cup of the penetrometer with mercury. Excess mercury is automatically drained back into the internal reservoir; only a small amount remains in the penetrometer.

As pressure on the filled penetrometer increases, mercury introduces into the sample's pores, beginning with those pores of a largest diameter. This requires that mercury moves from the capillary stem into the cup, resulting in a decrease capacitance between the now-shorter mercury column inside the stem and the metal cladding on the outer surface of the stem.

The instrument automatically collects low pressure measurements over the range of pressures specified by the operator. Then, the penetrometer is moved to the high pressure chamber, where high pressure measurements are taken. Data are automatically recorded including the low and high pressure data points, along with values entered by the operator, such as the weight of the sample and the weight of the penetrometer loaded with mercury.

Mercury porosimetry is based on the capillary law governing liquid penetration into small pores. This law, in the case of a non-wetting liquid like mercury, is expressed by the Washburn equation:

$$D = (1/P)4\,\gamma\,\cos\,\psi$$

Where D is pore diameter, P is the applied pressure, $\gamma$ the surface tension of mercury and $\psi$ the contact angle between the mercury and the sample, all in consistent units. The volume $V_i$ of intrusion of mercury penetrating the pores is measured directly as a function of applied pressure P. This information $P\text{-}V_i$ serves as a unique characterisation of pore structure.

The method comprises a calibration step and a measure step, for example:

a) Calibration step (C)

The goal of calibration is to determine the penetrometer volume (Vp) in square centimeters and the weight (Mp) in grams.

Each penetrometer is always used with the same cup and lid and is stored in a box with a unique penetrometer number.

The calibration procedure consists in:

C1) sealed penetrometer with its lid while using a grease to seal it correctly;
C2) weigh the whole (penetrometer plus grease plus lid). It is obtained the weight Mp in grams;
C3) create a file *sample* for each penetrometer in the software and select the cycle named calibration which implies only the steps of degassing and of filling of mercury;
C4) put the whole in the low pressure device and start the automatic analysis;
C5) by the end of the analysis weigh the penetrometer filled (penetrometer plus grease plus lid plus mercury) to obtain a mass Mpt.
C6) At this stage, it is possible to calculate the volume of the penetrometer

$Vp = (Mpt-Mp)/\rho Hg$

Formula where ρHg is the density of mercury in grams per cubic centimeter.

b) Measuring step (M)

The measuring of the sample consists in:

M1) weigh the sample (e), here a porous membrane, and obtain its mass Me
M2) put the sample in the penetrometer and close it with the corresponding lid while using grease as in step C1);
M3) create a file *sample* and choose a pressure table adapted for said sample as it is well known to one skilled in the art;
M4) put the *sample* in the low pressure device and start analysis;
M5) by the end of the low pressure test, weigh the penetrometer filled to obtain a mass Mt;
M6) put the whole in the high pressure device.

The results obtained with the low and high pressure tests are gathered by the software and EXCEL program developed internally is executed to obtain:

- diameters d50; d10; and d90 (in micrometer);
- density ρ in grams/milliliter; and
- intrusion volume Vi in milliters per gram; and finally
- the percentage of porosity in volume which is sought.

The results, which have been obtained within the invention, are subject matter of the tests of example 7.

- D3) Softening Point means the temperature of softening the relevant material, expressed in °Celsius as measured by elongation of fiber. It is measured the speed of elongation of a normalized fiber in function of temperature, when speed reaches 1 mm/minute, this is the temperature at $10^{7.6}$ Poises. This temperature is given by the manufacturer of the material.

D4) Coefficient of Thermal Expansion the coefficient of thermal expansion of the relevant material, expressed in $10^{-7}.C^{-1}$ units, is given by the manufacturer of the material.

The present invention relates to a method of manufacture of a microfluidic deviceas defined in claim 1.

According to a particular feature, said structure first Softening Point is at least 50°C higher than the membrane second Softening Point.

According to a variant embodiment, the structure first Softening Point (SP) is between 830 °C and 1050 °C, and the first Thermal Expansion Coefficient (TEC) is between $30x10^{-7}.C^{-1}$ and $37x10^{-7}.C^{-1}$.

The second Softening Point (SP) is ranging between 800°C and 850°C, and the second Thermal Expansion Coefficient (TEC) is between $29x10^{-7}.C^{1}$ and $37x10^{-7}.C^{-1}$.

According to a further variant embodiment, the second Softening Point is about 826°C and the second Thermal Expansion Coefficient (TEC) is about $32x10^{-7}.C^{-1}$.

According to another variant embodiment, the porosity of the membrane is controlled by controlling the temperature of the sealing step of the membrane with the contacting walls of the glass, ceramic or vitroceramic structure, so that the membrane will constitute a tightly sealed transverse wall in the microfluidic pathway obliging the fluid flowing in the pathway to go through the porous membrane.

According to a particular feature, the porous membrane glass material is PYREX® brand glass. PYREX® brand glass is available from Corning Incorporated and is sold in porous and non-porous and other forms by suppliers around the world, such as for instance from PROLABO, France. Commercial PYREX® glass typically has a Softening Point of 826°C and a Coefficient of Thermal Expansion of $32\times10^{-7}.C^{-1}$.

According to another further particular feature, the porous membrane is made from borosilicate glass. An example being the marketed PYREX® material from PROLABO™, France.

According to another particular feature, the glass, ceramic or vitroceramic structure is selected from ceramic and its composite powders such as zirconia silicate, aluminium silicate, zirconia, alumina, silicon carbide, silicon nitride, and ceramic composition comprising zirconia-Al.

Examples of materials available on the market suitable for the glass, ceramic or vitroceramic structure are:

- Eagle Xg™ (Corning) with a Softening Point of 971°C and a Coefficient of Thermal Expansion of $31.7\times10^{-7}.C^{-1}$;
- 1737 Glass™ (Corning) with a Softening Point of 966°C and a Coefficient of Thermal Expansion of $36.7\times10^{-7}.C^{-1}$; and
- Jade™ (Corning) with a Softening Point of 1.036°C and a Coefficient of Thermal Expansion of $37\times10^{-7}.C^{-1}$.

According to another particular feature, the porosity of the porous membrane, obtained after the sealing treatment step, ranges between 10 and 20%.

The porosity prior to sealing is generally much higher; and for example the porosity prior to sealing of the porous membrane is of about 30%.

The structure and porous membrane sealing step is performed at a temperature ranging between 780 and 820°C in particular at about 800°C for a period of time of from 5 to 15 minutes, in particular for about 10 minutes.

More generally, according to the invention, the structure materials and porous membrane materials should present a low coefficient of thermal expansion (CTE) mismatch, so they can be well sealed together. Moreover, the membrane material should keep adequate porosity at the sealing temperatures. As a consequence, a sufficient Softening Point (SP or TL) difference is required; the Softening Point of the porous material should be lower than that of the structure materials to keep some open porosity at the sealing temperature.

Concerning the fabrication of the membrane, the choice of a commercial PYREX® glass membrane, available in different classes of porosity, with a good chemical durability, at low cost has been tested, as a best embodiment, and reported in the examples below.

Shaping of the porous membrane can be easily performed such as by dicing, polishing, or drilling. Sample shapes such as circle, stripes, and rectangles have been obtained with no real issue. Inventors have noticed that for low thickness, below 1 mm, manipulation with caution is recommended, with use of tweezers for example.

Concerning the structure fabrication, the inventors mostly used pressed layers from Hot pressing process, see, for example, EP 1,964,817 and PCT publication WO2008/106160 for a more detailed description. Glass sheets are pressed between machined graphite molds to obtain a negative replicate. After finishing process steps operations such trimming, hole drilling, cleaning and so forth, layers may be kept at about 100°C in a furnace prior to the glass frit deposition process to help to achieve good sealing.

As material for the glass frit, a glass, ceramic or vitroceramic may be used typically having a Softening Point ranging between 785 and 800°C. A good example is Glass BM5 (CORNING) available on the market and having a Softening Point of about 785°C and a second Thermal Expansion Coefficient of about $30\times10^{-7}.C^{-1}$.

After frit deposition the samples followed a sintering cycle (850-940°C) as h open structures (i.e., not stacked for sealing together) to smooth the frit.

Then, the porous membrane(s) is/are inserted within the microstructure to intersect the microfluidic pathway(s) and the assembly is put through a thermal cycle at about (800-815°C) with a load placed on the stacked layers to provide some force for improved searling.

It is apparent that the invention enables to solve the technical problems set forth above notably by enabling to industrially adapt the porosity of the porous membrane at will while starting from porous membranes available on the market.

**DESCRIPTION OF THE FIGURES**

Figure 1 represents a diagram flow sheet of a process of manufacture of a microfluidic device according to the invention.

Figure 2 represents an exploded view of a present best embodiment of a microfluidic structure according to the invention with a one way porous membrane.

Figure 3 represents a transverse cross section view of the microfluidic device of figure 2, in assembled position showing the internal position of the microporous membranes according to the invention.

Figure 4 represents a cross section view in transverse through the inlets and oulets, showing the fluid inlets and outlets which are used for providing a microfluidic device.

Figure 5 shows, according to a transverse cross section view similar to figure 3, a second embodiment of a microstructure device of the invention in which the one way porous membrane 18 is laid over an inlet port 22.

Figure 6 shows, according to a transverse cross section view similar to figure 5, a third embodiment of a microstructure device of the invention in which the one way porous membrane 18 is laid over an inlet port provided with a pre-chamber.

Figure 7 shows, according to a transverse cross section view similar to figures 5 and 6, a fourth embodiment of a microstructure device of the invention in which the one way porous membrane 18 is laid over an inlet port and has a thickness adapted to completely intersect the microfluidic channel and occupy the full height of the channel, all reactants being injected through upstream flow inputs.

Figure 8 shows, according to a transverse cross section view similar to figure 5, a fifth embodiment of an injection chamber of the invention in which the one way porous membrane 18 is laid over an inlet port provided in a wall of said chamber which is aimed to constitute an independent pre-chamber separately manufactured and arranged on a side of another independently made microfluidic structure of any type microstructure device as shown on Figure 9.

Figure 9 shows, according to a transverse cross section view similar to figure 5, a fifth embodiment of a microstructure device of the invention aimed to receive the independent injection fluid pre-chamber separately manufactured shown on Figure 8, and arranged on a side of another independently made microfluific structure; and

FIG 10 shows the test results of porosity reported in volume percent as a function of the heating temperature in °C of a porous material aimed to form an invention membrane, available on the market and constituted in this case by PYREX® glass obtained from PROLABO™.

## EXAMPLE I of the INVENTION

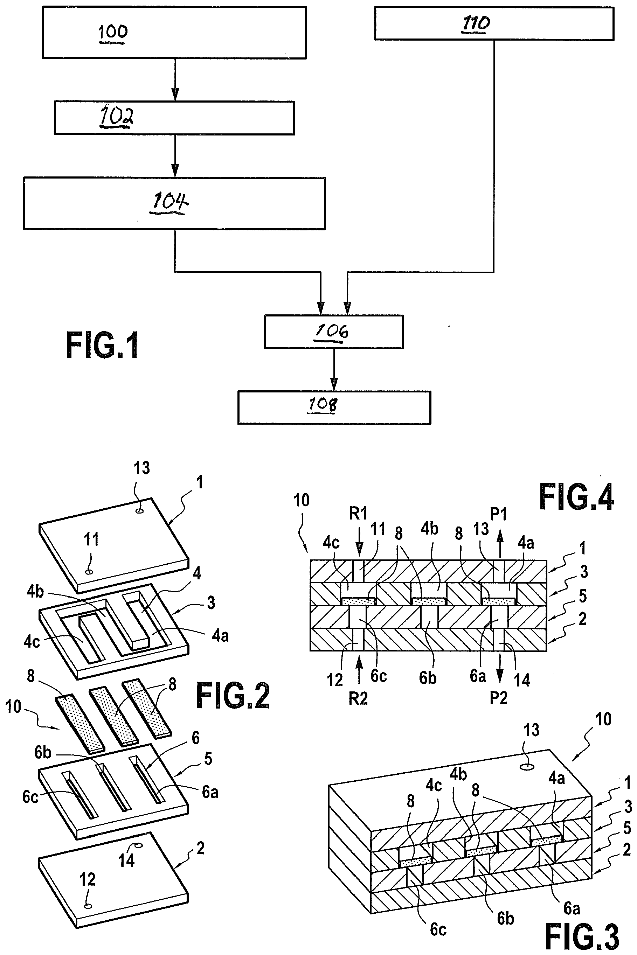

In reference to figure 1, it is shown a method of manufacture of a microfluidic device according to the invention, which is described in combination with figures 2 to 4.

At first, glass, ceramic or vitro-ceramic plates 1 and 2, aimed to constitute respectively the external "upper" part 1 and external "lower" part 2 of the microstructure device 10 are manufactured which are then foreseen to be assembled with the intermediate plates respectively 3 and 5 having specific channel designs 4 and 6, respectively, for microfluidic flow.

Here, in the structure shown on figure 2, intermediate plate 3 can have a microfluidic channel 4 which provides 3 main channels 4a, 4b, 4c communicating together whereas intermediate lower plate 5 has 3 through slots 6 here parallel 6a, 6b, 6c which are not communicating.

The upper plate 1 and intermediate plate 3 are in a first step 100 manufactured separately by hot pressing micromachining together and thereafter are provided with a deposited frit in step 102, for instance by spraying with a glass frit BM5™ from CORNING™ with a Softening Point of 785°C and a Coefficient of thermal Expansion of 30.5x10-7.C-1 which is thereafter sintered as an open structure (i.e., not stacked together to form a closed structure) in a open-structure frit sintering step 104, by frit sintering for instance at a temperature of 940°C for 30 minutes.

Lower plate and intermediate lower plate 5 are prepared similarly.

According to the invention, the material used for making at least the intermediate plates 3 and 5 and the external upper plate 1 and external lower plate 2 are typically made in a glass, ceramic or vitroceramic material which has a first softening point temperature and a first thermal expansion coefficient.

On the other hand, the porous membranes 8 may be separately manufactured and are available on the market, and making or providing such membranes 8 is represented by the step 110 of Figure 1.

The porous membranes are also typically made in glass, ceramic or vitro-ceramic.

Further, according to the invention, the porous membranes 8 are made in a glass, ceramic, vitroceramic material which has a second Softening Point temperature and a second thermal expansion coefficient.

It is a requirement of the invention that the second Softening Point of the porous membrane is different from, and in a particular variant is at least 30°C less, or even at least 50°C less, than the first Softening Point of the material used to make the glass structure of plates 1, 2, 3 and 5, whereas the second thermal expansion coefficient is close to the first thermal expansion coefficient.

According to a particular feature of the invention, the difference between the second thermal expansion coefficient and the first thermal expansion coefficient is lower or equal to 5.10-7.C-1. There are many various glasses, ceramics or vitroceramics which are available on the market meeting this requirement.

For instance, for the microstructure plates 1, 2, 3 and 5, it can be used a glass available on the market Eagle Xg™; 8737 Glass™, Jade™ which are all available on the market from CORNING INC.

On the other hand, for manufacturing the porous membrane, the glass material which can be used can be PYREX® glass from Corning Incorporated, Corning, NY, USA, and available on the market from various sources, including from PROLABO™, France.

According to another particular feature of the invention, the first Softening Point (SP) is ranging between 820 °C and 1036 °C, and the first Thermal Expansion Coefficient (TEC) is ranging between 30.5x10-7.C-1 and 37x10-7.C-1.

On the other hand, according to another particular feature of the invention, the porous membrane is made in PYREX® glass (obtainable from PROLABO™), the second Softening Point (SP) thereof is about 826°C, and the second Thermal Expansion Coefficient (TEC) thereof is about 32.10-7.C-1.

Also, as above said the glass frit used for binding the structure can be a glass frit BM5™ from Corning Incorporated, Corning NY USA, with a Softening Point of 785°C and a Coefficient of thermal expansion of 30.5x10-7.C-1.

In other words, the structures material of plates 1, 2, 3 and 5, and the porous membrane material 8 are made of 2 different glasses with a significant Softening Point temperature difference of at least 30°C, better at least 50°C, but with a low thermal expansion coefficient mismatch, which is in particular inferior or equal to 5.10-7.C-1.

As it is further well understandable from the flow chart of figure 1 and the exploded view of figure 2, the microporous membranes 8 which are separately manufactured and notably available on the market, are constituting inserts which are cut to size and are assembled or "sandwiched" between the top assembly of plates 1 and 3 and the lower assembly of plates 2 and 5 to be put in the longitudinal through channels 4 to lay over the longitudinal through grooves 6a, 6b, 6c as is well seen on figures 3 and 4, in an assembly step 106. The microporous membrane 8 thus constitutes a wall that must that is traversed by by the flow path.

It is used a porous membrane available on the market of a selected porosity.

The porous membranes available on the market have typically the following porosities set forth in Table I.

**TABLE I**

| | Class | | | | | |
|---|---|---|---|---|---|---|
| | **0** | **1** | **2** | **3** | **4** | **5** |
| **Porosity (μm)** | 161 to 250 | 101 to 160 | 41 to 100 | 17 to | 11 to 16 | 4 to 10 |

Once the porous membrane 8 is sandwiched between the top assembly of plates 1 and 3 and the lower assembly of plates 2 and 5 as above said, there is provided according to the invention a specific sealing cycle, represented by step 108, at a temperature lower than the second Softening Point of the porous membrane but precisely controlled for a period of time so as to control the change of porosity of the porous membrane, such as at about 805°C for about 10 minutes.

A working example is making the structure of plates 1, 2, 3, 5 in Eagle Xg (CORNING™) having a Softening Point of 971°C, and a Coefficient of Thermal Expansion of 31.7x10-7.C-1, sintered together with the use of a glass frit BM5™ from CORNING™, and sandwiching a porous membrane made in PYREX® glass obtainable from PROLABO™ which has a Softening Point of about 826°C and an initial porosity of 28.5%. The sealing cycle providing control of porosity will be at about 805°C for a period of time of 5 to 15 minutes, in particular about 10 min, thereby obtaining a porosity ranging between 10 and 20%.

These porous membranes are according to a particular feature manufactured to work as a one-way valve, namely they permit passage of fluid, namely gas or liquid or both, in a single way, usually here only input and no return through the membrane. Manufacture of these one way membranes is well known and these one way membranes are available on the market.

### EXAMPLE 2 of the INVENTION - Manufacture of an injector structure Device

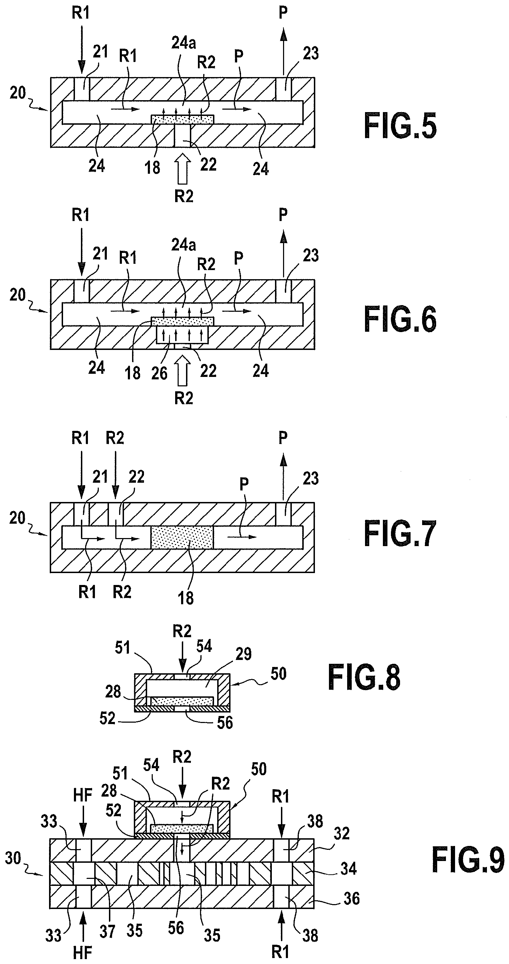

In Reference to figure 5, a second embodiment of a microstructure device 20 of the invention is shown, in which the one way porous membrane 18, made in the same PYREX® glass material available from the market from PROLABO™ as in example 1, is laid over an inlet port 22 which can be for instance a fluid reactant in gaseous form R2 whereas another reactant R1 is introduced on the other side of the microstructure 20 through another inlet port 21. In this embodiment, said microstructure is provided with a larger size microfluidic channel 24 which is of larger size than the thickness of the porous membrane 18 to leave a path 24a between the porous membrane and the upper part of channel 24, the flow of the reactant R1 receiving the gaseous flow R2 through the membrane and to be admixed therewith to cause the reaction to occur to generate a reaction product P, and then the product P is going out through a specific outlet port 23.

According to another particular feature of the invention, the porosity of the porous membrane, obtained after the same sealing treatment step as for example 1, ranges between 10 and 20% as compared with a porosity prior to sealing of 28.7% for the PYREX® glass available from the market from PROLABO™.

A working ewample is making the structure of microstructure device 20 in 1737 Glass™ (Corning) with a Softening Point of 966°C and a Coefficient of Thermal Expansion of 36.7x10-7.C-1;, sintered together with the use of a glass frit BMS™ from CORNING™, and sandwiching a porous membrane made in PYREX® glass from PROLABO™ which has a Softening Point of about 826°C and an initial porosity of 28.5%. The sealing cycle providing control of porosity will be at about 805°C for a period of time of 5 to 15 minutes, in particular about 10 min, thereby obtaining a porosity ranging between 10 and 20%.

The microstructure shown on Figure 5 contitutes a type of injector which has been compared to commercial metal injector (nozzle) at different flow rates as set forth in table II herebelow.

As shown from table II, there is no difference in injector performance after provision of the invention structure 20. The invention porous membrane structure 20 gives the same performance as the nozzle injector of the prior art.

**TABLE II**

| Liquid flow rate (ml/min) | P liquid | P gas | Liquid flow rate (ml/min) | P liquid | P gas | Liquid flow rate (ml/min) | P liquid | P gas |
|---|---|---|---|---|---|---|---|---|
| 25 | 0,22 | 0,17 | 25 | 0,33 | 0,27 | 25 | 0,45 | 0,4 |
| 50 | 0.47 | 0,29 | 50 | 0,63 | 0,44 | 50 | 0,86 | 0,67 |
| 75 | 0,81 | 0,44 | 75 | 1 | 0,65 | 75 | 1,25 | 0,89 |
| 100 | 1,26 | 0,65 | 100 | 1,48 | 0,85 | 100 | 1,74 | 1,13 |
| Liquid flow rate (ml/min) | P liquid | P gas | Liquid flow rate (ml/min) | P liquid | P gas | Liquid flow rate (ml/min) | P liquid | P gas |
| 25 | 0,23 | 0,21 | 25 | 0,39 | 0,37 | 25 | 0,58 | 0,54 |
| 50 | 0,49 | 0,43 | 50 | 0,7 | 0,64 | 50 | 0,98 | 0,93 |
| 75 | 0,8 | 0,71 | 75 | 1,04 | 0,96 | 75 | 1,36 | 1,26 |
| 100 | 1,08 | 1 | 100 | 1,47 | 1,33 | 100 | 1,78 | 1,69 |

Further, table II shows that the porous injector can be reused. The structure is used while eliminating the air bubbles in water, stored again without new treatment and reused the following day, six times.

There was only a slight decrease of pressure drop, whereas the metallic injectors having a sole orifice were broken due to corrosion, in comparison.

Another advantage of the invention lies in the fact that the starting procedure is much easier. It was impossible to work with metallic injector with high liquid flow rates and at low gas flow rates (ratio 1/10) whereas the porous membrane injector of the invention did not show any dependency with regard to the flow rate ratio.

### Example 3 of the invention

Figure 6 shows, according to a transverse cross section view similar to figure 5, a third embodiment of a microstructure device of the invention, constituting a variant embodiment of the embodiment of Figure 5, so that the same reference numbers are used. In this embodiment of Figure 6, the one way porous membrane 18 of example 1 is laid over an inlet port 22 provided with a pre-chamber 26 diffusing fluid reactant R2 on a larger surface of the porous membrane 18.

## Example 4 of the invention

Figure 7 shows, according to a transverse cross section view similar to figures 5 and 6, a fourth embodiment of a microstructure device of the invention, constituting a variant embodiment of the embodiment of Figure 5 so that the same reference numbers are used. In this embodiment of Figure 7, the one way porous membrane 18 has a thickness adapted to completely intersect the microfluidic channel and occupy the full height of the channel and all reactants are injected through upstream flow inputs.

## Example 5 of the invention

Figure 8 shows, according to a transverse cross section view similar to figure 5, a fifth embodiment of an injection chamber 50 of the invention in which the one way porous membrane 28 is laid over an "inlet" port 56 for a fluid reactant provided in a wall 52 of said chamber 50, which constitutes an independent pre-chamber, separately manufactured. The fluid reactant R2 is introduced in the room 29 of the prechamber 50 through another fluid input port 54 in the opposite wall 51.

## Example 6 of the invention

Figure 9 shows, according to a transverse cross section view similar to figure 5, a fifth embodiment of a microstructure device 30 of the invention aimed to receive the independent injection fluid pre-chamber 50, separately manufactured as shown on Figure 8, and arranged on a side of independently made microfluidic structure 50 to have the "inlet" port 56 matching with the input fluid port 31 for fluid reactant R2, wheter liquid or gas.

The joining of the injection fluid pre-chamber 50 with the microfluidic structure 30 is done as usual with the frit technique discussed above.

The structure of the microfluidic structure 30 can be taken from the prior art cited previously and is made in glass, ceramic or vitroceramic. It typically comprises a top plate 32, an intermediate plate 34 provided with at least one microfluidic path 35 defining a microfluidic chamber for the treatment of fluids R1, R2, and at least one microfluidic path 37 for a heat exchange fluid HF; and a bottom plate 36.

Fluid inlet ports 33 are here provided on opposite sides of top and bottom plates 32, 36 for example for the heat exchange fluid HF, together with fluid inlet ports 38 for input of reactant R1. Outlets for both the heat exchange fluid HF and for reaction product P, not shown in this cross-section, are also provided.

Another working ewample is making the structure of microstructure device in JADE™ glass (Corning) with a Softening Point of 1036°C and a Coefficient of Thermal Expansion of 37x10-7.C-1; sintered together with the use of a glass frit BM5™ from CORNING™, and sandwiching a porous membrane made in PYREX® glass obtained from PROLABO™ which has a Softening Point of about 826°C and an initial porosity of 28.5%. The sealing cycle providing control of porosity will be at about 805°C for a period of time of 5 to 15 minutes, in particular about 10 min, thereby obtaining a porosity ranging between 10 and 20%.

## EXAMPLE 7 of the invention

TESTS CONTROL POROSITY performed on porous membrane PYREX® glass from PROLABO™

Tests of porosity have been made with a porous membrane PYREX® glass obtained from PROLABO™, available on the market, which has a Softening Point of about 826°C and an initial porosity of about 28.5%.

This membrane has been put inside a closed heated oven, heated respectively at a temperature of 800°C, 805°C, 820°C , for a period of time of 10 minutes and then, after cooling at room temperature (22°C+- 3°C), the porosity was measured according to the method of measure of porosity previously given.

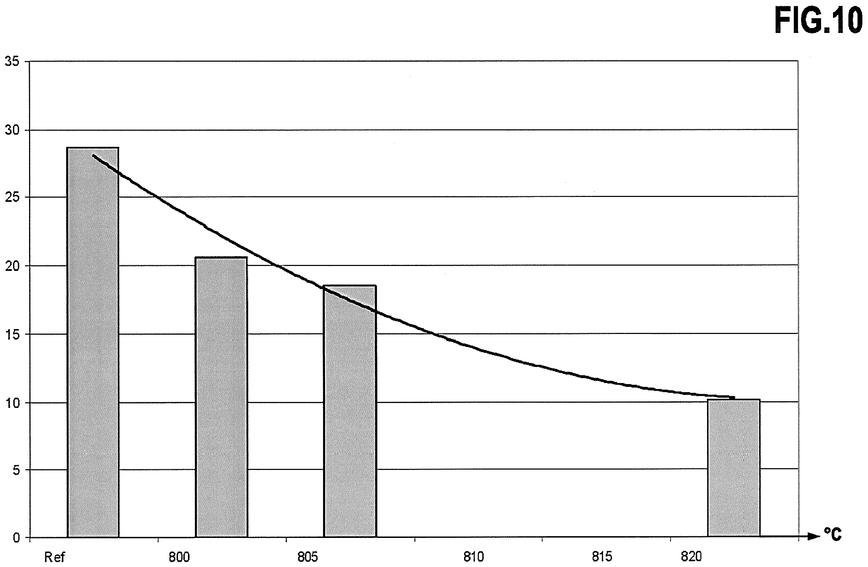

The results obtained are reported in TABLE III herebelow and are set forth, with regard to the volume percent of porosity, in enclosed FIG 10:

**TABLE III**

| POROSITY TESTS RESULTS | | | | | | | |
| --- | --- | --- | --- | --- | --- | --- | --- |
| Sample ID PYREX® obtained from PROLABO® 9520 | Porosity (%) | d50 (μm) | d10 (μm) | d90 (μm) | Total Intrusion Volume (ml/g) | Skeletal Density (g/ml) | File N° |
| Ref* | 28,7 | 63,6 | 29,8 | 97 | 0,185 | 2,17 | 368 |
| 800C | 20,6 | 52 | 28,2 | 74,7 | 0,117 | 2,2 | 369 |
| 805C | 18,5 | 49,3 | 26,9 | 70,2 | 0,103 | 2,2 | 370 |
| 820C | 10,2 | 32 | 16,6 | 42,6 | 0,052 | 2,15 | 371 |
| * not thermally treated | | | | | | | |

The methods of use and/or the devices disclosed herein are generally useful in performing any process that involves mixing, separation, extraction, crystallization, precipitation, or otherwise processing fluids or mixtures of fluids, including multiphase mixtures of fluids—and including fluids or mixtures of fluids including multiphase mixtures of fluids that also contain solids—within a microstructure. The processing may include a physical process, a chemical reaction defined as a process that results in the interconversion of organic, inorganic, or both organic and inorganic species, a biochemical process, or any other form of processing. The following non-limiting list of reactions may be performed with the disclosed methods and/or devices: oxidation; reduction; substitution; elimination; addition; ligand exchange; metal exchange; and ion exchange. More specifically, reactions of any of the following non-limiting list may be performed with the disclosed methods and/or devices: polymerisation; alkylation; dealkylation; nitration; peroxidation; sulfoxidation; epoxidation; ammoxidation; hydrogenation; dehydrogenation; organometallic reactions; precious metal chemistry/ homogeneous catalyst reactions; carbonylation; thiocarbonylation; alkoxylation; halogenation; dehydrohalogenation; dehalogenation; hydroformylation; carboxylation; decarboxylation; amination; arylation; peptide coupling; aldol condensation; cyclocondensation; dehydrocyclization; esterification; amidation; heterocyclic synthesis; dehydration; alcoholysis; hydrolysis; ammonolysis; etherification; enzymatic synthesis; ketalization; saponification; isomerisation; quaternization; formylation; phase transfer reactions; silylations; nitrile synthesis; phosphorylation; ozonolysis; azide chemistry; metathesis; hydrosilylation; coupling reactions; and enzymatic reactions.

It is apparent that the invention enables to industrially adapt the porosity of the porous membrane at will while using starting porous membranes available on the market at low cost.

The embodiments shown in the Figures 1 to 10 are an integral part of the invention and are to be construed only as examples. Various changes of form, design, or arrangement may be made to the invention without departing from the scope of the claims.

**Claims**

1. A method of manufacture of a microfluidic device (10; 20; 30), comprising the following steps:

a) Provision of a glass, ceramic or vitroceramic microfluidic structure comprising at least one microfluidic pathway; said glass, ceramic or vitroceramic structure is made of a first glass, ceramic or vitroceramic glass material with a first Softening Point (SP) and a first Thermal Expansion Coefficient (TEC);

b) Provision of at least one microporous membrane (8; 18; 28) made of a second glass, ceramic or vitroceramic material with a second Softening Point (SP) ranging between 800°C and 850°C and a second Thermal Expansion Coefficient (TEC) ranging between $29 \times 10^{-7}.C^{-1}$ and $37 \times 10^{-7}.C^{-1}$; wherein the first Softening Point is at least 30°C higher than the second Softening Point whereas the difference between the second Thermal Expansion Coefficient and the first Thermal Expansion Coefficient is lower or equal to $5 \times 10^{-7}.C^{-1}$;

c) Performing assembly of the membrane with the microfluidic structure, said microporous membrane being located within said microfluidic pathway and constituting a tranverse wall of said pathway;

d) Performing at least one sealing step at a temperature below said second Softening Point, said temperature ranging between 780 and 820°C, and for a period of time of 5 to 15 minutes adapted for controlling change of porosity of the membrane, and providing tight sealing of the membrane with the contacting walls of the microfluidic structure, thereby having the membrane constituting a tight transversal wall in the microfluidic pathway obliging the fluid flowing in the pathway to go through the porous membrane.

**2.** The method of claim 1, wherein said structure first Softening Point is at least 50°C higher than the membrane second Softening Point.

**3.** The method of claim 1 or 2, wherein the sealing step is performed at about 805°C, for about 10 minutes.

**4.** The method of claim 1, 2 or 3, wherein the first Softening Point(SP) is ranging between 830°C and 1050°C, and the first Thermal Expansion Coefficient (TEC) is ranging between $30 \times 10^{-7} . C^{-1}$ and $37 \times 10^{-7} . C^{-1}$.

**5.** The method of anyone of claims 1 to 4, wherein the second Softening Point (SP) is about 826°C, and the second Thermal Expansion Coefficient (TEC) is about $32 . 10^{-7} . C^{-1}$.

**6.** The method of anyone of claims 1 to 5, wherein, before assembly of the microporous membrane with the structure, a glass frit is deposited, made of a glass, ceramic or vitroceramic material having a Softening Point ranging between 785 and 800°C; and after frit deposition, a sintering cycle at 850-950°C is performed as open not stacked structures to smooth the frit.

**7.** The method of anyone of claims 1 to 6, wherein the glass, ceramic or vitroceramic structure is selected from ceramic and its composite powders such as zirconia silicate, aluminium silicate, zirconia, aluminia, silicon carbide, silicon nitride, and ceramic composition comprising zirconia-Al.

**8.** The method according to any one of the claims 1 to 7, wherein the porous membrane is made from borosilicate glass.

**9.** The method according to any one of the claims 1 to 7, wherein the porosity of the porous membrane, obtained after the sealing treatment step ranges between 10 and 20%.

## Patentansprüche

**1.** Verfahren zur Herstellung einer Mikrofluidvorrichtung (10; 20; 30), umfassend die folgenden Schritte:

a) Bereitstellen einer Glas-, Keramik- oder Vitrokeramikmikrofluidstruktur, die wenigstens einen Mikrofluidweg umfasst, wobei die Glas-, Keramik- oder Vitrokeramikstruktur aus einem ersten Glas-, Keramik- oder Vitrokeramikglasmaterial mit einem ersten Erweichungspunkt (SP) und einem ersten Wärmeausdehnungskoeffizienten (TEC) hergestellt ist,

b) Herstellen wenigstens einer mikroporösen Membran (8; 18; 28), die aus einem zweiten Glas-, Keramik- oder Vitrokeramikmaterial mit einem Erweichungspunkt (SP), der zwischen 800°C und 850°C liegt, und einem zweiten Wärmeausdehnungskoeffizienten (TEC), der zwischen $29 \times 10^{-7} . C^{-1}$ und $37 \times 10^{-7} . C^{-1}$ liegt, hergestellt ist, wobei der erste Erweichungspunkt wenigstens 30 °C höher ist als der zweite Erweichungspunkt, wohingegen die Differenz zwischen dem zweiten Wärmeausdehnungskoeffizienten und dem ersten Wärmeausdehnungskoeffizienten weniger als oder gleich $5 \times 10^{-7} . C^{-1}$ ist,

c) Zusammenfügen der Membran mit der Mikrofluidstruktur, wobei die mikroporöse Membran innerhalb des Mikrofluidweges angeordnet ist und eine Querwand des Weges bildet,

d) Durchführen wenigstens eines Abdichtungsschrittes bei einer Temperatur unter dem zweiten Erweichungspunkt, wobei die Temperatur zwischen 780 und 820°C liegt, und für eine Zeitdauer von 5 bis 15 Minuten, der dazu ausgelegt ist, die Veränderung der Porosität der Membran zu steuern, und Bereitstellen einer dichten Abdichtung der Membran mit den Kontaktwänden der Mikrofluidstruktur, wodurch die Membran, die eine dichte Querwand in dem Mikrofluidweg bildet, die in dem Weg fließende Flüssigkeit dazu zwingt, durch die poröse Membran zu fließen.

**2.** Verfahren nach Anspruch 1, wobei der erste Strukturerweichungspunkt wenigstens 50 °C höher ist als der zweite Membranerweichungspunkt.

**3.** Verfahren nach Anspruch 1 oder 2, wobei der Abdichtungsschritt bei ungefähr 805 °C für ungefähr 10 Minuten durchgeführt wird.

**4.** Verfahren nach Anspruch 1, 2, oder 3, wobei der erste Erweichungspunkt (SP) zwischen 830°C und 1.050°C liegt und der erste Wärmeausdehnungskoeffizient (TEC) zwischen $30 \times 10^{-7} . C^{-1}$ und $37 \times 10^{-7} . C^{-1}$ liegt.

**5.** Verfahren nach einem der Ansprüche 1 bis 4, wobei der zweite Erweichungspunkt (SP) ungefähr 826°C beträgt und der zweite Wärmeausdehnungskoeffizient (TEC) ungefähr 32 x $10^{-7}$.$C^{-1}$ beträgt.

**6.** Verfahren nach einem der Ansprüche 1 bis 5, wobei vor dem Zusammenfügen der mikroporösen Membran mit der Struktur, eine Glasfritte abgelagert wird, die aus einem Glas-, Keramik- oder Vitrokeramikmaterial hergestellt ist, das einen Erweichungspunkt aufweist, der zwischen 785 und 800°C liegt, und nach der Frittenablagerung ein Sinterzyklus bei 850 bis 950°C durchgeführt wird, um nichtgestapelte Strukturen zu öffnen, um die Fritte zu glätten.

**7.** Verfahren nach einem der Ansprüche 1 bis 6, wobei die Glas-, Keramik- oder Vitrokeramikstruktur aus Keramik und seinen Verbundpulvern ausgebildet ist, wie z.B. Zirkonsilicat, Aluminiumsilicat, Zirkonia, Aluminia, Siliciumcarbid, Siliciumnitrid und Keramikzusammensetzungen, die Zirkonia-Al umfassen.

**8.** Verfahren nach einem der Ansprüche 1 bis 7, wobei die poröse Membran aus Borsilicatglas hergestellt ist.

**9.** Verfahren nach einem der Ansprüche 1 bis 7, wobei die Porosität der porösen Membran, die nach dem Abdichtungsschritt erhalten ist, zwischen 10 und 20 % liegt.

**Revendications**

**1.** Procédé de fabrication d'un dispositif microfluidique (10 ; 20; 30) comprenant les étapes suivantes :

a) fourniture d'une structure microfluidique en verre, céramique ou vitrocéramique comprenant au moins un passage microfluidique ; ladite structure en verre, céramique ou vitrocéramique est constituée par un premier matériau de type verre, céramique ou vitrocéramique ayant un premier point de ramollissement (PR) et un premier coefficient de dilatation thermique (CDT) ;

b) fourniture d'au moins une membrane microporeuse (8; 18; 28) en verre constituée par un second matériau de type verre, céramique ou vitrocéramique ayant un second point de ramollissement (PR) situé entre 800°C et 850°C et un second coefficient de dilatation thermique (CDT) situé entre $29\times10^{-7}$.$C^1$ et $37\times10^{-7}$.$C^{-1}$ ; où le premier point de ramollissement est d'au moins 30°C supérieur au second point de ramollissement, tandis que la différence entre le second coefficient de dilatation thermique et le premier coefficient de dilatation thermique est inférieure ou égale à $5\times10^{-7}$.$C^{-1}$ ;

c) réalisation de l'assemblage de la membrane avec la structure microfluidique, ladite membrane microporeuse étant disposée dans ledit passage microfluidique et constituant une cloison transversale dudit passage;

d) réalisation d'au moins une étape de fixation étanche à une température inférieure audit second point de ramollissement, ladite température étant située entre 780 et 820°C, et pendant une durée de 5 à 15 min adaptée pour contrôler le changement de porosité de la membrane, et permettant la fixation étanche de la membrane avec les parois de la structure microfluidique en contact, de sorte que la membrane constitue une paroi transversale étanche dans le dit passage microfluidique qui oblige le fluide circulant dans le passage à traverser la membrane poreuse.

**2.** Procédé selon la revendication 1, **caractérisé en ce que** ledit premier point de ramollissement de la structure est supérieur d'au moins 50°C au second point de ramollissement de la membrane.

**3.** Procédé selon la revendication 1 ou 2, **caractérisé en ce que** l'étape de fixation étanche est réalisée à environ 805°C, pendant environ 10 min.

**4.** Procédé selon la revendication 1, 2 ou 3, **caractérisé en ce que** le premier point de ramollissement (PR) est situé entre 830°C et 1050°C, et le premier coefficient de dilatation thermique (CDT) est situé entre $30\times10^{-7}$.$C^{-1}$ et $37\times10^{-7}$.$C^{-1}$.

**5.** Procédé selon l'une des revendications 1 à 4, **caractérisé en ce que** le second point de ramollissement (PR) est d'environ 826°C, et le second coefficient de dilatation thermique (CDT) est d'environ $32\times10^{-7}$.$C^{-1}$.

**6.** Procédé selon l'une des revendications 1 à 5, **caractérisé en ce que**, avant l'assemblage de la membrane microporeuse avec la structure, une fritte de verre est déposée, réalisée en matériau de verre, céramique ou vitrocéramique ayant un point de ramollissement situé entre 785 et 800°C ; et après dépôt de la fritte, un cycle de frittage à 850-940°C réalisé avec des structures ouvertes pour uniformiser la fritte.

7. Procédé selon l'une quelconque des revendications 1 à 6, **caractérisé en ce que** la structure en verre, céramique ou vitrocéramique est choisie parmi les céramiques et leurs poudres composites comme le silicate de zirconium, le silicate d'aluminium, le zircone, l'alumine, le carbure de silicium, le nitrure de silicium et les compositions céramiques comprenant de la zircone-Al.

8. Procédé selon l'une quelconque des revendications 1 à 7, **caractérisé en ce que** la membrane poreuse est en verre de borosilicate.

9. Procédé selon l'une des revendications 1 à 7, **caractérisé en ce que** la porosité de la membrane poreuse, obtenue après l'étape de traitement de fixation étanche, est située entre 10 et 20 %.

FIG.1

FIG.2

FIG.3

FIG.4

FIG.5

FIG.6

FIG.7

FIG.8

FIG.9

FIG.10

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- FR 0958542
- US 20030192587 A1
- WO 2005063379 A1
- WO 2008085429 A2
- US 5965092 A
- WO 03093406 A
- JP 08024600 B
- US 5961932 A
- US 2004005422 A
- US 2003192587 A
- EP 1964817 A
- WO 2008106160 A